# EUROPEAN PATENT APPLICATION

(11) **EP 3 689 707 A1**
(43) Date of publication of application: **05.08.2020**
(21) Application number: 18863002.4
(22) Date of filing: 27.03.2018
(51) Int. Cl.: B61L 23/22, B60L 15/40, B61L 23/14

(54) **TRAIN CONTROL DEVICE**

(30) Priority: 28.09.2017 JP 2017187407
(71) Applicant: Hitachi, Ltd., Tokyo 100-8280 (JP)
(72) Inventor: MIYAMOTO, Masayuki, Tokyo 100-8280 (JP); HAYASAKA, Kyohei, Tokyo 100-8280 (JP)
(74) Representative: Mewburn Ellis LLP
(86) International application number: PCT/JP2018/012394
(87) International publication number: WO 2019/064649

(57) **Abstract**

Provided is a stop limit point creation method that ensures safety when trains travel in a facing manner.

In a train control device that determines a stop limit point of a train traveling on a traveling path, when a plurality of trains travel in a facing manner, train stop control is performed in which an obstacle position of the train is determined as the longest stop limit point of an oncoming train, and a point where a safety margin distance is ensured there is set as the stop limit point of the train.

## Description

### Technical Field

The present invention relates to a train control system that transmits position information of an own train calculated by the train to a ground system, transmits control information to the train from the ground system, and performs train control based on the control information.

### Background Art

In related art, the signal which consists of digital information are used to control train. That makes possible to transmit stopping position from ground system to the train. An onboard automatic train control device creates a one-step brake curve that stops at a stop point based on vehicle performance and route conditions. When the own train speed exceeds the brake curve, the brake is automatically actuated to shorten the train interval and improve the ride comfort.

According to a digital ATC (Automatic Train Control) in related art, train detection of a ground control device is performed using a track circuit, and notification of control information from ground to vehicle has been realized by digital transmission using a rail.

On the other hand, in recent years, a train control system using wireless as shown in Patent Literature 1 has been put into practical use with development of wireless technology. That is, in the train control system, an onboard control device has a function of detecting a position of a train, and transmits the detected train position information from a wireless communication unit to a ground side. The control device on the ground side receives the train position information from the onboard wireless communication unit and obtains a stop limit point (a point obtained by subtracting the certain distance from preceding train position. The certain distance indicate a position detection error of the train for which a travel permission position is calculated, a position detection error of a preceding train, and a distance that the preceding train may move backward from a position of the preceding train) that is a limit position where the train can safely travel, notifies the onboard control device via wireless communication. The onboard control device controls the train such that a stop limit point is not exceeded.

In general, a train control system using wireless communication for bidirectional digital transmission between onboard and ground is called CBTC (Communication Based Train Control). Since bidirectional communication between ground and onboard is possible by using wireless, train detection can be realized by wirelessly notifying the ground of position information of the own train calculated and obtained by the train instead of presence detection of the train performed by a track circuit of the digital ATC in the CBTC. Accordingly, compared to the system in related art used to perform presence detection in a block section of a track circuit unit, the CBTC can detect an actual train position, and the ground control device can realize train control in which time and distance intervals are shortened compared to the digital ATC by notifying a rear train of the stop limit point based thereon.

### Prior Art Literature

### Patent Literature

PTL 1: JP-A-2000-159105

### Summary of Invention

### Technical Problem

Train control to ensure safety is required so that a dangerous situation where a preceding train that is an oncoming train and a succeeding train that is an own train travel in a facing manner does not occur. In the present disclosure, the "dangerous situation" means an event that results in danger from a dangerous state.

As a method of controlling an interval between trains when the trains do not face each other, an obstacle position of the succeeding train is set as a tail of the preceding train, and stop control is performed from there to a point where a safety margin distance is ensured.

As a method of controlling the interval between the trains when the trains faces each other by applying this, an own train obstacle position is set as an oncoming train stop limit point, and stop control is performed from there to a point where the safety margin distance is ensured.

Here, considering that some trouble (train protection, route restoration and the like) occurs between a head position and the stop limit point of the oncoming train, the oncoming train stop limit point is shortened to a point where the safety margin distance is ensured from a trouble occurrence position. On the other hand, since an oncoming train stop limit point is shortened, an own train stop limit point is extended to a point where the safety margin distance is ensured from the trouble occurrence position in conjunction therewith so as to be able to proceed forward.

However, the oncoming train may not keep up with brake control and overrun the stop limit point. Therefore, the own train needs to shorten the stop limit point to a position where the safety margin distance is ensured from the head position of the oncoming train, and unnecessary emergency stop control may be performed even though no trouble occurs within a range of a own train stop pattern. In the worst case, the oncoming train may overruns the own train stop limit point and lead to dangerous situation.

An object of the invention is to provide an own train stop limit point creation method that ensures safety when trains travels in a facing manner.

### Solution to Problem

In order to solve the above problems, on the typical train control devices according to the invention is a train control device that determines a stop limit point of a train traveling on a traveling path. When a plurality of trains travel in a facing manner, an obstacle position of an own train that is one of the trains is determined as an oncoming train stop limit point that is a stop limit point of an oncoming train that is a train facing the own train, the own train obstacle position is held at the farthest position, and a point approach to the own train by a safety margin distance from the own train obstacle is set as the stop limit point of the own train.

### Advantageous Effect

According to the present invention, safety can be ensured while preventing unnecessary emergency stop control or dangerous situation by providing a stop limit point creation method that ensures safety in a situation of traveling in a facing manner.

### Brief Description of Drawings

[FIG. 1] FIG. 1 is a diagram showing an example of a system configuration between onboard and ground according to a first embodiment.
[FIG. 2] FIG. 2 is a diagram showing an example of stop limit points of an own train and an oncoming train that are facing each other in related art.
[FIG. 3] FIG. 3 is a diagram showing an example of stop limit points when train protection occurs within a stop pattern range of an oncoming train.
[FIG. 4] FIG. 4 is a diagram showing an example of stop limit points when the oncoming train overruns the train protection range.
[FIG. 5] FIG. 5 is a diagram showing an example in which an obstacle position of an own train is set as the longest stop limit point of the oncoming train when trains are facing each other.
[FIG. 6] FIG. 6 is a diagram showing an example when the oncoming train overruns the train protection range in a state of FIG. 5.
[FIG. 7] FIG. 7 is a diagram showing an example of stop limit points when holding of the obstacle position of the own train is released.
[FIG. 8] FIG. 8 is a diagram showing an example of a flowchart showing an example of stop limit point creation performed by a ground control device.

### Description of Embodiments

An embodiment of a train control device according to the invention will be described below with reference to the drawings.

### [First Embodiment]

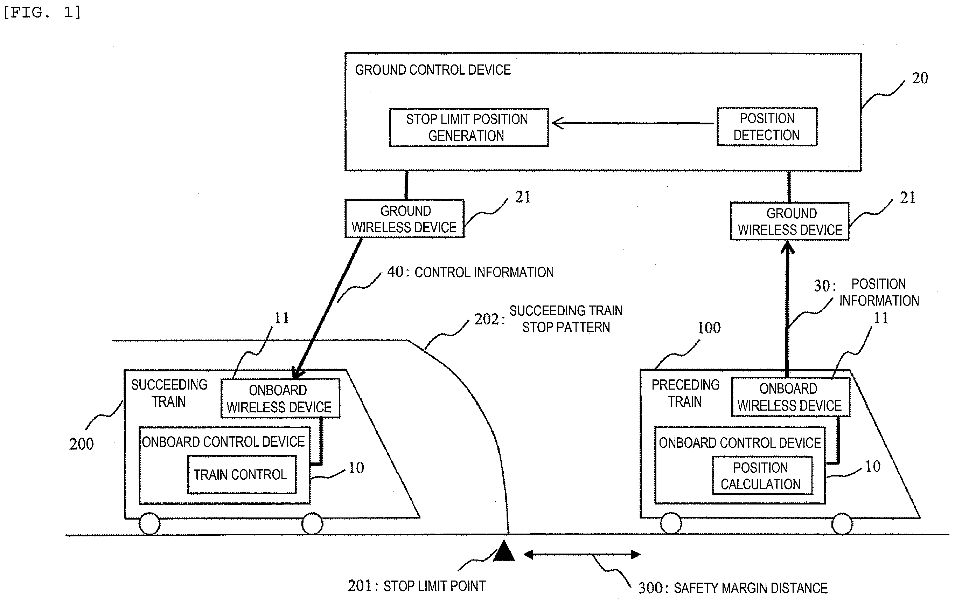

FIG. 1 shows a schematic diagram of a train control system including an onboard system and a ground system. The onboard system includes an onboard control device 10 and an onboard wireless device 11. The ground system includes a ground wireless device 21 that performs wireless communication with the onboard wireless device 11 and a ground control device 20 that controls an interval between trains on a route.

The onboard control device 10 calculates an own train position. The onboard control device 10 notifies position information 30 of the own train position to the ground control device 20 by bidirectional communication between the onboard wireless device 11 and the ground wireless device 21. The ground control device 20 calculates a stop limit point 201 of a succeeding train 200 in consideration of a safety margin distance 300 from a preceding train 100 based on the position information 30 notified from the train, and notifies the succeeding train 200 as control information 40 by wireless communication.

In the system described above, train control in which safety is ensured is required so as to avoid a dangerous situation where a preceding train that is an oncoming train and a succeeding train that is the own train travel in a facing manner.

As a method of controlling the interval between the trains when the trains do not face each other, an obstacle position of the succeeding train 200 is set as a tail of the preceding train 100, and stop control is performed from there to a point where the safety margin distance 300 is ensured.

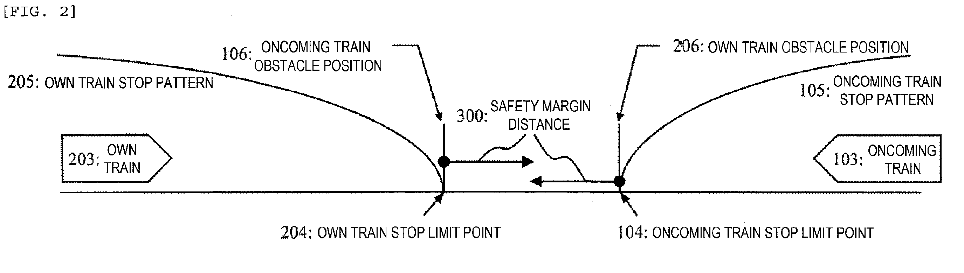

As a method of controlling the interval between the trains when the trains faces each other by applying this, as shown in FIG. 2, an own train obstacle position 206 is set as an oncoming train stop limit point 104, and stop control is performed from there to a point where the safety margin distance 300 is ensured.

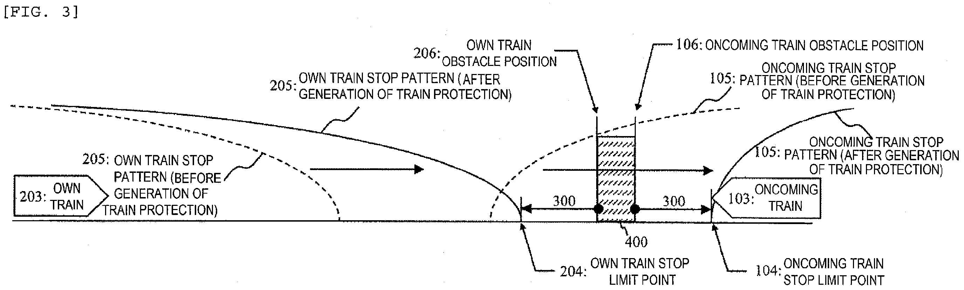

However, as shown in FIG. 3, when some trouble occurs, for example, train protection 400 occurs within a range of an oncoming train stop pattern 105, the oncoming train stop limit point 104 is shortened from a position of the train protection 400 to a point where the safety margin distance 300 is ensured. On the other hand, since the oncoming train stop limit point 104 is shortened, an own train stop limit point 204 is extended to a point where the safety margin distance 300 is ensured at the position of the train protection 400 in conjunction therewith so as to be able to proceed forward. The above trouble may be a route restoration or the like.

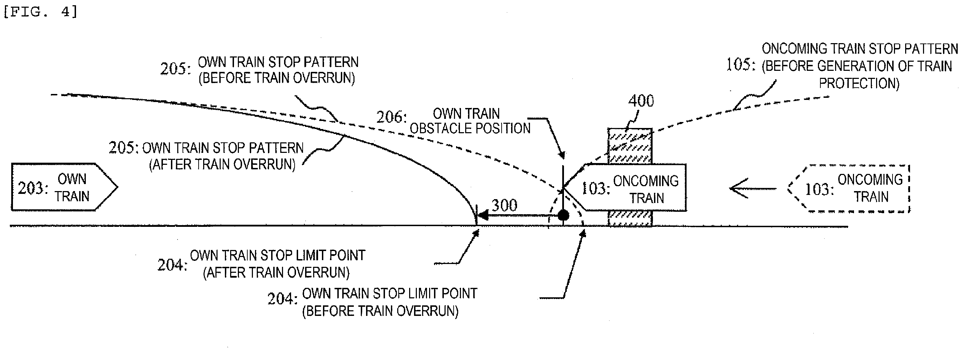

Next, as shown in FIG. 4, assuming that the oncoming train 103 does not keep up with brake control and overruns, and reaches the own train stop limit point 204, since the own train stop limit point 204 is shortened to a position where the safety margin distance 300 is ensured from a head position of the oncoming train 103, unnecessary emergency stop control is performed even though no trouble occurs within a range of the own train stop pattern 205. In the worst case, it is determined that the oncoming train 103 exceeds the own train stop limit point 204 and is dangerous.

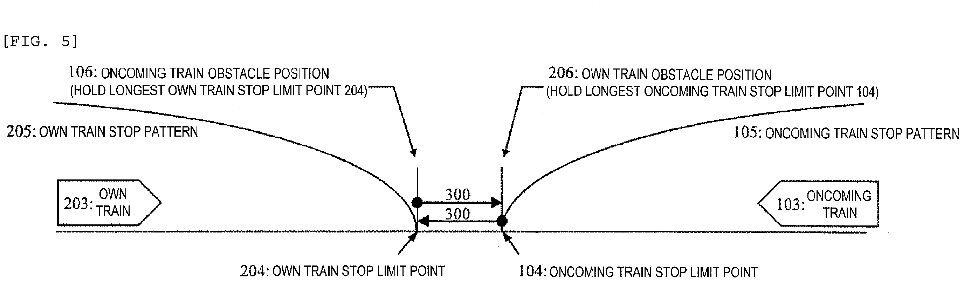

In order to prevent the above event, in case where the ground control device detects a change in a driving direction of the preceding train and a state where the trains are facing each other occurs, as shown in FIG. 5, the own train obstacle position 206 is set as the longest oncoming train stop limit point 104, the train is stopped by a point where the safety margin distance 300 is ensured there, and when the stop limit point is updated far away from the oncoming train in a driving direction of the oncoming train, the latest stop limit point is updated to the longest oncoming train stop limit point 104 and held. The same applies to the oncoming train obstacle position 106, the oncoming train obstacle position 106 is set as the longest own train stop limit point 204, the train is stopped by a point where the safety margin 300 is ensured there, and when the stop limit point is updated far away in a driving direction of the own train, the latest stop limit point is updated to the longest own train stop limit point 204 and held.

In FIG. 5, when the ground control device detects a driving direction change of the preceding train, the obstacle position of the train is set as the longest oncoming train stop limit point, but the obstacle position may be always set as the longest stop limit point of the train regardless of the driving direction.

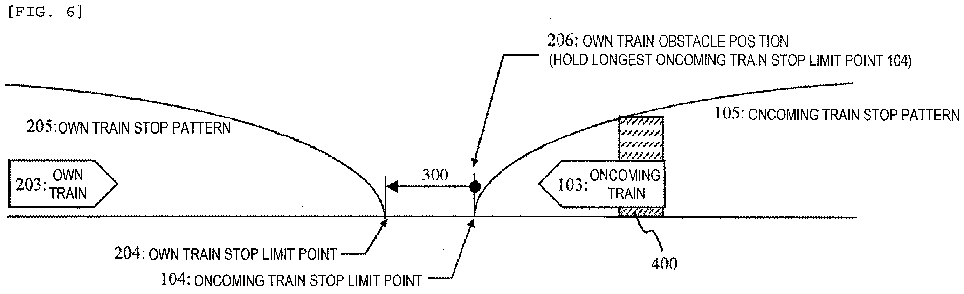

With the stop point creation method described above, even if the oncoming train overruns the train protection as shown in FIG. 6, the own train stop limit point 204 is not shortened.

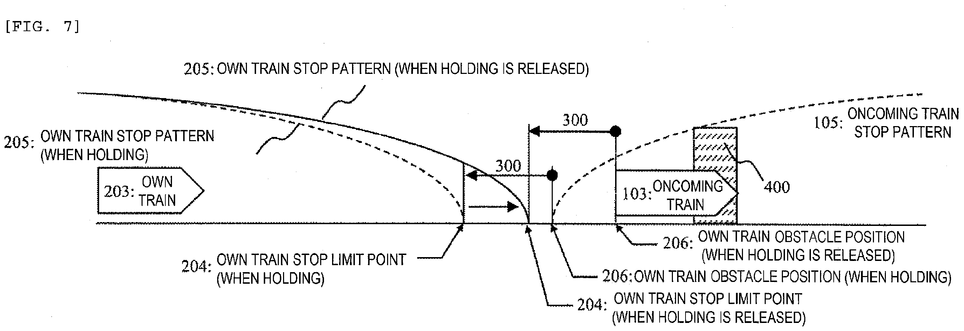

When the oncoming train 103 returns the driving direction to a forward direction as shown in FIG. 7, the held own train obstacle position 206 is released and reset to a tail of the oncoming train. That is, the own train 203 and the oncoming train 103 return to an initial state where the trains proceed in the same direction. Further, the own train stop limit point 204 is extended from the end of the oncoming train to a point where the safety margin distance 300 is ensured. A holding release condition of the own train obstacle position 206 is satisfied when a train traveling route is changed, or when the oncoming train 103 overruns and exceeds the longest oncoming train stop limit point 104 as shown in FIG. 5.

In FIG 5, when the oncoming train 103 is stopped, the longest oncoming train stop limit point 104 of the oncoming train 103 that has been held so far is reset once, but as long as the trains travel in a facing manner, the point where the safety margin distance 300 is ensured at the longest oncoming train stop limit point 104 of the oncoming train 103 is calculated again and reflected on the own train stop limit point 204.

In the above description, the preceding train is described as the oncoming train and the succeeding train as the own train. However, the preceding train can be read as the own train and the succeeding as the oncoming train.

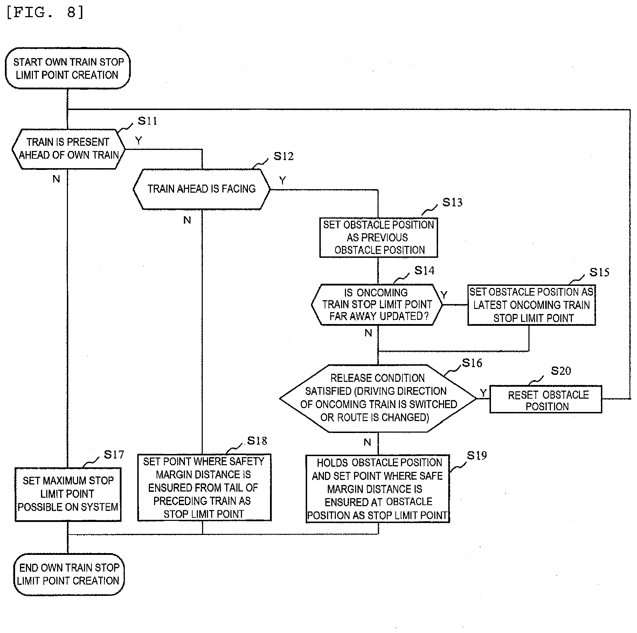

FIG. 8 is a flowchart showing an example of stop limit point creation performed by the ground control device. First, it is determined whether a train is present ahead of an own train (S11). When a train is not present ahead of the own train (S11: No), a maximum stop limit point possible on the system is set as an own train stop limit point (S17).

When a train is present ahead of the own train (S11: Yes), it is determined whether the train ahead is facing (S12) . When the train ahead is not facing (S12: No), a point where a safety margin distance is ensured from a tail of the preceding train is set as an own train stop limit point (S18) . When the train ahead is facing (S12: Yes), an obstacle position is set as a previous obstacle position (S13).

Next, it is determined whether the oncoming train stop limit point is updated far away (S14). When the stop limit point of the oncoming train is updated far away (S14: Yes), an obstacle position is set as a latest oncoming train stop limit point (S15).

Next, it is determined whether any obstacle position reset conditions is satisfied (S16). Here, the obstacle position reset condition is satisfied when a driving direction of the oncoming train is switched (switched forward), or when the oncoming train overruns and exceeds the held longest stop oncoming train stop limit point, or when the oncoming train is stopped, or when the route is changed. When none of the obstacle position reset conditions is satisfied (S16: No), the obstacle position is held, and a point where the safe margin distance is ensured at the obstacle position is set as an own train stop limit point (S19). When any one of the obstacle position reset conditions is satisfied (S16: YES), the obstacle position is reset, and the stop limit point is created again (S11).

The present invention is not limited to the embodiment described above, and includes various embodiments. For example, although the embodiment described above describes a train control system that uses wireless communication for data transmission and reception between onboard and ground, the idea of creating the own train stop limit point from the longest oncoming train stop limit point when the trains are facing each other can be used even in a system that transmits a train control instruction from ground to onboard by a track circuit like a digital ATC in related art.

### Reference Sign List

10: onboard control device 11: onboard wireless device
20: ground control device 21: ground wireless device
30: position information 40: control information
100: preceding train
103: oncoming train
104: oncoming train stop limit point
105: oncoming train stop pattern
106: oncoming train obstacle position
200: succeeding train
201: succeeding train stop limit point
202: succeeding train stop pattern
203: own train
204: own train stop limit point
205: own train stop pattern
206: own train obstacle position
300: safety margin distance
400: train protection

## Claims

1. A train control device that determines a stop limit point of a train travelling on a traveling path, wherein
when a plurality of trains travel in a facing manner, an obstacle position of an own train that is one of the trains is determined as the stop limit point of the train oncoming, and a point close to the own train by a safety margin distance from the obstacle position of the own train is set as the stop limit point of the own train.

2. The train control device according to claim 1, wherein
when the oncoming train stop limit point is updated far away in a driving direction of the oncoming train, the own train obstacle position is updated to the updated oncoming train stop limit point.

3. The train control device according to any one of claims 1 to 2, wherein
when the plurality of trains travel in a facing manner is detected, the own train obstacle position and the oncoming train obstacle position are held.

4. The train control device according to any one of claims 1 to 3, wherein
the oncoming train stop limit point is held as the own train obstacle position.

5. The train control device according to any one of claims 3 to 4, wherein
when a route of the oncoming train is changed, the held own train obstacle position is reset.

6. The train control device according to any one of claims 3 to 5, wherein
when the oncoming train overruns and exceeds the own train obstacle position, holding of the own train obstacle position is released.

7. The train control device according to any one of claims 3 to 6, wherein
when the oncoming train is stopped, the holding of the own train obstacle position is released.

8. A train control device that determines a stop limit point of a train traveling on a traveling path, wherein
when a plurality of trains travel on the traveling path, an obstacle position of the own train that is one of the trains is always held at a longest point.
